# EUROPEAN PATENT APPLICATION

(11) **EP 3 203 365 A1**
(43) Date of publication of application: **09.08.2017**
(21) Application number: 17153939.8
(22) Date of filing: 31.01.2017
(51) Int. Cl.: G06F 3/0488, H04L 29/08

(54) **CROSS PLATFORM ANNOTATION SYNCING**

(30) Priority: 05.02.2016 US 201662292153 P; 10.01.2017 US 201715403137
(71) Applicant: Prysm, Inc., San Jose, CA 95134 (US)
(72) Inventor: CARLOS, Dino Cris, Fishers, Indiana 46037 (US); WEAVER, Stephen James, Indianapolis, Indiana 46278 (US); CUZZORT, Adam P., Westfield, Indiana 46074 (US)
(74) Representative: Scilletta, Andrea

(57) **Abstract**

Various embodiments enable user-applied annotations that are created and visually associated with an asset on one appliance to be shared amongst and synchronized between other appliances working together in a collaborative workspace environment. As an annotation is made, a stroke collection is defined and provided into a formatted list that represents the annotation. The formatted list is transmitted to a collaboration server which then notifies other appliances of the new annotation. When the other appliances request the formatted list, the collaborative server transmits the formatted list to the other applications so that the new annotation can be rendered on a corresponding display device.

## Description

### BACKGROUND

Currently, digital content may be shared between different computer devices implementing various techniques. During a content sharing session, a shared workspace that includes various types of digital content may be displayed on multiple computer devices at different physical locations, or a shared workspace displayed on one computer device may be shared with different remote computer devices. In order to keep collaborations organized, it can be desirable to keep meeting participants synchronized with respect to the content of the collaboration.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different instances in the description and the figures may indicate similar or identical items. Entities represented in the figures may be indicative of one or more entities and thus reference may be made interchangeably to single or plural forms of the entities in the discussion.
FIG. 1 is an illustration of a collaboration system operable to employ techniques described herein.
FIG. 2 is a conceptual diagram of a communication infrastructure of the collaboration system of FIG. 1 as sharing content streams across appliances.
FIG. 3 depicts a streaming infrastructure of FIG. 2 in greater detail.
FIG. 4 depicts a messaging infrastructure of FIG. 2 in greater detail.
FIG. 5 depicts an annotation syncing process in accordance with one or more embodiments.
FIG. 6 depicts a large-format appliance and a reduced-format appliance in accordance with one or more embodiments.
FIG. 7 depicts a procedure in an example implementation in which annotations can be synchronized in a shared workspace.
FIG. 8 illustrates an example system including various components of an example device that can be implemented as any type of computing device as described and/or utilize with reference to the FIGS. to implement embodiments of the techniques described herein.

### DETAILED DESCRIPTION

### Overview

Various embodiments enable annotations that are visually associated with an asset on one appliance to be shared amongst and synchronized between other appliances working together in a collaborative workspace environment. That is, as individuals interact with assets in a shared workspace, individuals can create annotations which are visually associated with a particular asset, such as circling data, underlining a sentence, making notes in a margin, and the like. An annotation can be defined by a "stroke". A "stroke collection" is a list of strokes, where a "stroke" encompasses all the "stroke data" describing the stroke. Stroke data can include, by way of example and not limitation, a list of points that define the stroke, stroke size, stroke color, and any other metadata that may be collected concerning the stroke. Any or all strokes in a stroke collection can be communicated to a collaboration server which organizes and oversees synchronization between appliances. When the collaboration server receives the stroke or collection of strokes, the collaboration server sends a notification to the appliances of the other collaborative participants that a new stroke has been added to the collection of strokes that represents the annotation canvas of the particular asset. The appliances, after receiving the notification, can then communicate with the collaboration server to retrieve the latest strokes so that the annotations can be rendered on a corresponding appliance. Specifically, when an appliance communicates with the collaboration server, the collaboration server can communicate the stroke or collection of strokes back to the appliance. The appliance can then process the stroke and collection of strokes and render the strokes as an annotation relative to the asset that was previously annotated.

In the following discussion, an example environment is first described that may employ the techniques described herein. Example procedures are then described which may be performed in the example environment as well as other environments. Consequently, performance of the example procedures is not limited to the example environment and the example environment is not limited to performance of the example procedures.

### Example Environment

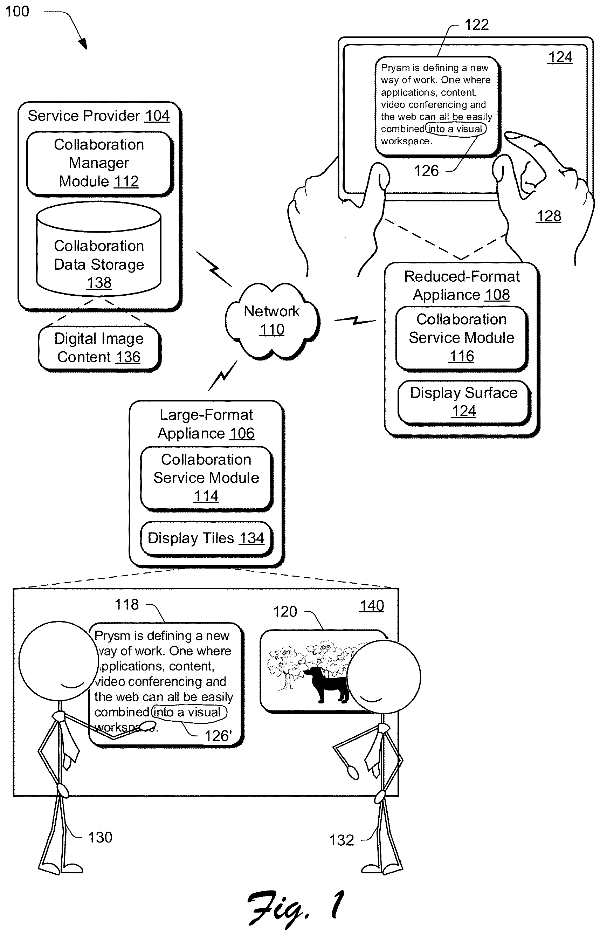

FIG. 1 is an illustration of a collaboration system 100 in an example implementation that is configured to implement one or more aspects of the techniques described herein. As shown, collaboration system 100 includes, without limitation, a service provider 104 and appliances that are used to implement a shared workspace, illustrated examples of which include a large-format appliance 106 and a reduced-format appliance 108, each of which are communicatively coupled via a network 110. The large-format appliance 106 is one that has a physically self-supporting display (e.g., greater than 35 inches diagonal) with rich hardware resources including processing, memory, or network resources, which may support simultaneous interaction with a plurality of users as illustrated. The reduced-format appliance 108, on the other hand, has a housing configured to be held by one or more hands of a user or placed on a surface (e.g., as a display device of a personal computer) and may have reduced processing, memory, and network resources in comparison to the large-format appliance 106, which support single user interaction due to this size. Although large and reduced format appliances 106, 108 are described in relation to the following examples, it should be readily apparent that a plurality of appliances may be made up of appliances that support large or reduced formats, solely.

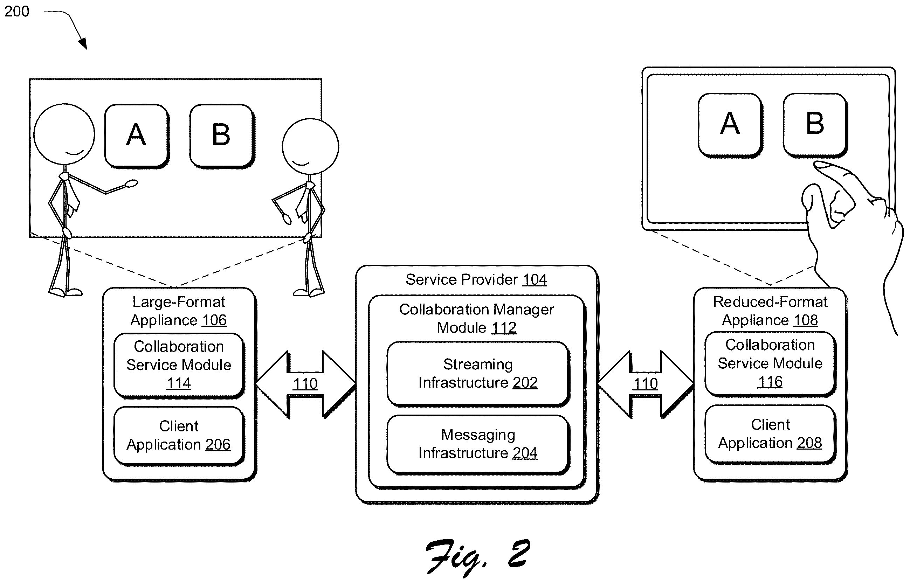

The service provider 104 is illustrated as including a collaboration manager module 112 and the appliances are illustrated as including respective collaboration service modules 114, 116 that together are representative of functionality implemented at least partially in hardware to support a shared workspace of a collaborative environment as further described in the following. Collaboration service modules 114, 116, for instance, may be configured as software such as applications, third-party plug-in modules, webpages, web applications, web platforms, and so on that support participation as part of a shared workspace. The collaboration manager module 112 is representative of functionality (e.g., implemented via software) that is usable to manage this interaction, examples of which are further described in relation to FIGS. 2-4. Although illustrated separately, functionality of the collaboration manager module 112 to manage the shared workspace may also be incorporated by the appliances themselves.

The collaboration service modules 114, 116, for instance, may be implemented as part of a web platform that work works in connection with network content, e.g. public content available via the "web," to implement a shared workspace. A web platform can include and make use of many different types of technologies such as, by way of example and not limitation, URLs, HTTP, REST, HTML, CSS, JavaScript, DOM, and the like. The web platform can also work with a variety of data formats such as XML, JSON, and the like. Web platform can include various web browsers, web applications (i.e. "web apps"), and the like. When executed, the web platform allows a respective appliance to retrieve assets (e.g., web content) such as electronic documents in the form of webpages (or other forms of electronic documents, such as a document file, XML file, PDF file, XLS file, etc.) from a Web server (e.g., the service provider) for display on a display device in conjunction with the shared workspace.

The shared workspace is configured to share asset and user interactions with those assets. In the context of this disclosure, an "asset" may refer to any interactive renderable content that can be displayed on a display, such as on a display device of the large-format appliance 106 or reduced-format appliance 108, among others. Interactive renderable content is generally derived from one or more persistent or non-persistent content streams that include sequential frames of video data, corresponding audio data, metadata, flowable/reflowable unstructured content, and potentially other types of data.

Generally, an asset may be displayed within a dynamically adjustable presentation window. An example of this is illustrated presentation windows 118, 120 for the large-format appliance 106 and presentation window 122 as displayed for the reduced-format appliance 108. For simplicity, an asset and corresponding dynamically adjustable presentation window are generally referred to herein as a single entity, i.e., an "asset." Assets may comprise content sources that are file-based, web-based, or Live Source. Assets may include images, videos, webpages (e.g., viewable within a browser, web-enabled application, web platform), documents, renderings of laptop screens, presentation slides, any other graphical user interface (GUI) of a software application, and the like.

An asset generally includes at least one display output generated by a software application, such as a GUI of the software application. In one example, the display output is a portion of a content stream. In addition, an asset is generally configured to receive one or more software application inputs. The reduced-format appliance 108, for instance, may include a display surface 124 (e.g., implemented by one or more display devices) having gesture detection functionality (e.g., a touch sensitive display device, a display device associated with one or more cameras configured to capture a natural user input, and so forth) to capture a gesture, such as an annotation 126 to circle text in a document made by one or more fingers of a user's hand 128. The annotation is then communicated and displayed on the large-format applicant 106 as annotation 126' that also circles corresponding text in a presentation window 118 that is viewable by users 130, 132 of that appliance. Thus, unlike a fixed image, an asset is a dynamic element that enables interaction with the software application associated with the asset, for example, for manipulation of the asset. For example, an asset may include select buttons, pull-down menus, control sliders, and so forth that are associated with the software application and can provide inputs to the software application.

As also referred to herein, a "shared workspace" is a virtual digital canvas on which assets associated therewith, and their corresponding content streams, are displayed within a suitable dynamic "viewport window". Thus, a shared workspace may comprise one or more associated assets (each asset displayed within a presentation window), whereby the entire shared workspace is displayed within a dynamically adjustable viewport window. A shared workspace may be displayed in the entire potential render area/space of a display device of the large-format appliance 106 and/or the reduced-format appliance 108, so that only a single shared workspace can be displayed on the surface thereof. In this case, the area of the viewport window that displays the shared workspace comprises the entire render area of the large-format appliance 106 and/or the reduced-format appliance 108. In other implementations, however, the shared workspace and the viewport window may be displayed in a sub-area of the total display area of the large-format appliance 106 and/or the reduced-format appliance 108 that does not comprise the entire render area of respective display devices of these appliances. For example, multiple shared workspaces may be displayed in multiple viewport windows on the large-format appliance 106 and/or the reduced-format appliance 108 concurrently, whereby each shared workspace and viewport window does not correspond to the entire display surface. Each asset associated with a shared workspace, and content stream(s) corresponding to the asset, are displayed in a presentation window according to defined dimensions (height and width) and a location within the shared workspace and viewport window. The asset and presentation window dimensions and location may also be user-adjustable. As also referred to herein, a "project" may comprise a set of one or more related shared workspaces.

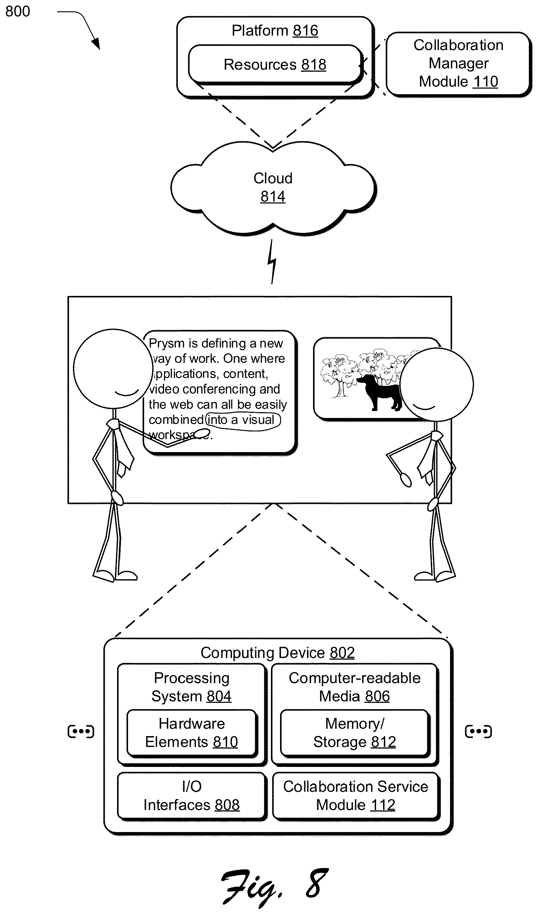

The large-format appliance 106 in this example is formed using a plurality of display tiles 134, e.g., arranged to form a display wall. The service provider 104 includes digital image content 136, which is illustrated as stored in collaboration data storage 136, e.g., using one or more memory devices as further described in relation to FIG. 8. The service provider 104 may receive this digital image content 136 from a variety of sources, such as the reduced-format appliance 108, the large-format appliance 106, remotely via a third-party source via the network 110 (e.g., a website), or from an information network or other data routing device, and converts said input into image data signals. Thus, digital image content 136 may be generated locally, with the large-format appliance 106 or the reduced-format appliance 108, or from some other location. For example, when the collaboration system 100 is used for remote conferencing, digital image content 136 may be received via any technically feasible communications or information network, wired or wireless, that allows data exchange, such as a wide area network (WAN), a local area network (LAN), a wireless (Wi-Fi) network, and/or the Internet, among others as represented by network 110. The service provider 104, reduced-format appliance 108, and large-format appliance 106 may be implemented as one of more computing devices, such as part of dedicated computers, as one or more servers of a server farm (e.g., for the service provider 104 as implementing one or more web services), dedicated integrated circuit, and so on. These computing devices are configured to maintain instructions in computer-readable media and that are executable by a processing system to perform one or more operations as further described in relation to FIG. 8.

Display devices of the large-format appliance 106 and/or the reduced-format appliance 108 may include the display surface or surfaces of any technically feasible display device or system type, including but not limited to the display surface of a light-emitting diode (LED) display, a digital light (DLP) or other projection displays, a liquid crystal display (LCD), optical light emitting diode display (OLED), laser-phosphor display (LPD) and/or a stereo 3D display all arranged as a single stand-alone display, head mounted display or as a single or multi-screen tiled array of displays. Display sizes may range from smaller handheld or head mounted display devices to full wall displays. In the example illustrated in FIG. 1, the large-format appliance 106 includes a plurality of display light engine and screen tiles mounted in an array, which are represented by the display tiles 134.

In operation, the large-format appliance 106 displays image data signals received from the service provider 104. For a tiled display, image data signals 102 are appropriately distributed among display tiles 134 such that a coherent image is displayed on a display surface 138 of the large-format appliance 106. Display surface 140 typically includes the combined display surfaces of display tiles 134. In addition, the display surface 138 of large-format appliance 106 is touch-sensitive that extends across part or all surface area of display tiles 134. In one implementation, the display surface 140 senses touch by detecting interference between a user and one or more beams of light, including, e.g., infrared laser beams. In other implementations, display surface 140 may rely on capacitive touch techniques, including surface capacitance, projected capacitance, or mutual capacitance, as well as optical techniques (e.g., sensor in a pixel), acoustic wave-based touch detection, resistive touch approaches, and so forth, without limitation and thus may detect "touch" inputs that do not involve actual physical contact, e.g., as part of a natural user interface. Touch sensitivity of the display surface 138 enables users to interact with assets displayed on the wall implementing touch gestures including tapping, dragging, swiping, and pinching. These touch gestures may replace or supplement the use of typical peripheral I/O devices, although the display surface 140 may receive inputs from such devices, as well. In this regard, the large-format appliance 106 may also include typical peripheral I/O devices (not shown), such as an external keyboard or mouse.

The display surface 140 may be a "multi-touch" surface, which can recognize more than one point of contact on the large-format appliance 106, enabling the recognition of complex gestures, such as two or three-finger swipes, pinch gestures, and rotation gestures as well as multiuser two, four, six etc. hands touch or gestures. Thus, a plurality of users 130, 132 may interact with assets on the display surface 140 implementing touch gestures such as dragging to reposition assets on the screen, tapping assets to display menu options, swiping to page through assets, or implementing pinch gestures to resize assets. Multiple users 130, 132 may also interact with assets on the screen simultaneously. Again, examples of assets include application environments, images, videos, webpages, documents, mirroring or renderings of laptop screens, presentation slides, content streams, and so forth. Touch signals are sent from the display surface 140 to the service provider 104 for processing and interpretation. It will be appreciated that the system shown herein is illustrative only and that variations and modifications are possible.

FIG. 2 is a conceptual diagram of a communication infrastructure 200 of the collaboration system 100 of FIG. 1 as sharing content streams across appliances, e.g., across the large and reduced format appliances 106, 108 through interaction with the service provider 104. As shown, this communication infrastructure 200 includes, without limitation, the large-format appliance 106 and the reduced-format appliance 108 communicatively coupled to service provider 104 via a network 110. As shown in FIG. 2, communication infrastructure 200 of this example implementation includes streaming infrastructure 202 and messaging infrastructure 204 included as part of the collaboration manager module 112 to support communication of the collaboration service modules 114, 116 to implement the shared workspace.

Large-format appliance 106 is illustrated as sharing a content stream A, via communication infrastructure 200, with the reduced-format appliance 108. In response, reduced-format appliance 108 is configured to retrieve content stream A from communication infrastructure 200 and to display that content stream on a display device of the reduced-format appliance 108 with its content stream B. Likewise, reduced-format appliance 108 is configured to share content stream B, via communication infrastructure 200, with the large-format appliance 106. In response, the large-format appliance 106 is configured to retrieve content stream B from communication infrastructure 200 and to display that content stream on a display device of the large-format appliance 106 with its content stream A.

In this fashion, the large and reduced format appliances 106, 108 are configured to coordinate with one another via the service provider 104 to generate a shared workspace that includes content streams A and B. Content streams A and B may be used to generate different assets rendered within the shared workspace. In one embodiment, each of the large and reduced format appliances 106, 108 perform a similar process to reconstruct the shared workspace, thereby generating a local version of that shared workspace that is similar to other local versions of the shared workspace reconstructed at other appliances. As a general matter, the functionality of the large and reduced format appliances 106, 108 are coordinated by respective collaboration service modules 114, 116 and client applications 206, 208, respectively.

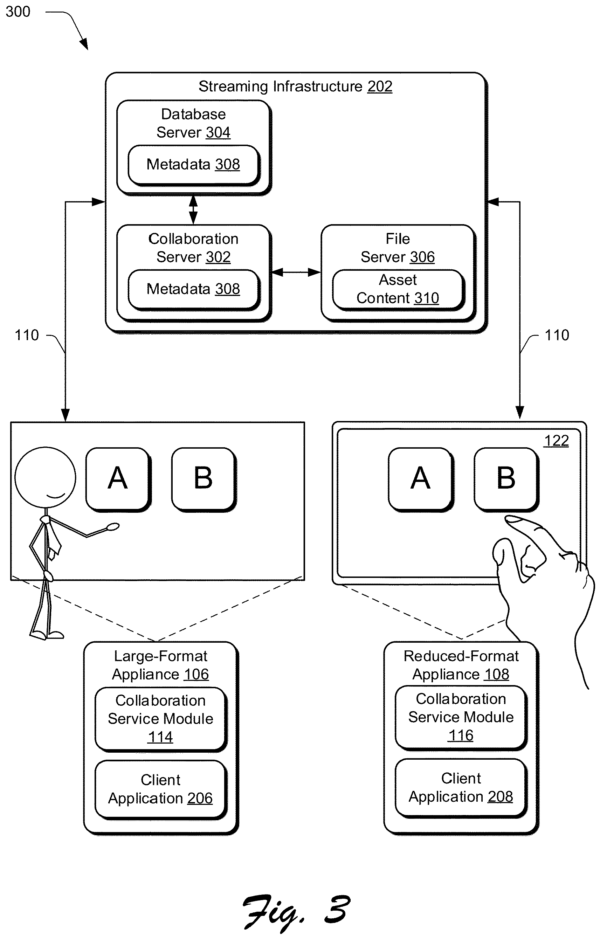

Client applications 206, 208 are software programs that generally reside within a memory (as further described in relation to FIG. 8) associated with the respective appliances. Client applications 206, 208 may be executed by a processing system included within the respective appliances. When executed, client applications 206, 208 setup and manage the shared workspace discussed above in conjunction with FIG. 2, which, again, includes content streams A and B. In one implementation, the shared workspace is defined by metadata that is accessible by both the large and reduced format appliances 106, 108. Each of the large and reduced format appliances 106, 108 may generate a local version of the shared workspace that is substantially synchronized with the other local version, based on that metadata (discussed below in relation to FIG. 3).

In doing so, client application 206 is configured to transmit content stream A to streaming infrastructure 200 for subsequent streaming to the reduced-format appliance 108. Client application 206 also transmits a message to the reduced-format appliance 108, via messaging infrastructure 204, that indicates to the large-format appliance 106 that content stream A is available and can be accessed at a location reflected in the message. In like fashion, client application 208 is configured to transmit content stream B to streaming infrastructure 202 for subsequent streaming to the large-format appliance 106. Client application 208 also transmits a message to the large-format appliance 106, via messaging infrastructure 204, that indicates to the large-format appliance 106 that content stream B is available and can be accessed at a location reflected in the message. The message indicates that access may occur from a location within streaming infrastructure 202.

Client application 206 may also broadcast a message via messaging infrastructure 204 to the reduced-format appliance 108 that specifies various attributes associated with content stream A that may be used to display content stream A. The attributes may include a location/position, a picture size, an aspect ratio, or a resolution with which to display content stream A on the reduced-format appliance 108, among others, and may be included within metadata described below in relation to FIG. 3. Client application 208 may extract the attributes from messaging infrastructure 204, and then display content stream A at a particular position on a display device of the reduced-format appliance 108, with a specific picture size, aspect ratio, and resolution, as provided by messaging infrastructure 204. Through this technique, the large-format appliance 106 is capable of sharing content stream A with the reduced-format appliance 108. The reduced-format appliance 108 is also configured to perform a complimentary technique in order to share content stream B with the large-format appliance 106.

Client applications 206, 208 are thus configured to perform similar techniques in order to share content streams A and B, respectively with one another. When client application 206 renders content stream A on a display device of the large-format appliance 106 and, also, streams content stream B from streaming infrastructure 202, the large-format appliance 106 thus constructs a version of a shared workspace that includes content stream A and B. Similarly, when client application 208 renders content stream B on a display device of the reduced-format appliance 108 and, also streams content stream A from streaming infrastructure 202, the large-format appliance 106 similarly constructs a version of that shared workspace that includes content streams A and B.

The appliances (e.g., the large and reduced format appliances 106, 108) discussed herein are generally coupled together via streaming infrastructure 202 and messaging infrastructure 204. Each of these different infrastructures may include hardware that is cloud-based and/or co-located on-premises with the various appliance, which are both represented by network 110. However, persons skilled in the art will recognize that a wide variety of different approaches may be implemented to stream content streams and transport messages/messages between display systems.

FIG. 3 depicts a block diagram 300 showing the streaming infrastructure 202 of FIG. 2 in greater detail. Streaming infrastructure 202 in this example includes a collaboration server 302, a database server 304, and a file server 306. Each server may comprise a computer device having a processor (such as processing system unit described in relation to FIG. 8) and a computer-readable medium such as memory, the processor executing software for performing functions and operations described herein. Collaboration server 302, database server 304, and file server 306 may be implemented as shown as separate and distinct computing devices/structures coupled to each other and to the appliances via a network 110. Alternatively, functionality of collaboration server 302, database server 304, and file server 306 may be implemented as a single computing device/structure in a single location (e.g., logically or virtually), or in any other technically feasible combination of structures. Further, one or more of collaboration server 302, database server 304, and/or file server 306 may be implemented as a distributed computing system. The network 110 may be via any technically feasible communications or information network, wired or wireless, that allows data exchange, such as a wide area network (WAN), a local area network (LAN), a wireless (WiFi) network, and/or the Internet, among others.

Collaboration server 302 coordinates the flow of information between the various appliances (e.g., the large and reduced format appliances 106, 108), database server 304, and file server 306. Thus, in some implementations, collaboration server 302 is a streaming server for the appliances. In some embodiments, the application program interface (API) endpoint for the appliances and/or business logic associated with streaming infrastructure 202 resides in collaboration server 302. In addition, collaboration server 302 receives requests from appliances and can send notifications to the appliances. Therefore, there is generally a two-way connection between collaboration server 302 and each of appliances, e.g., the large and reduced format appliances 106, 108. Alternatively or additionally, appliances may make requests on collaboration server 302 through the API. For example, during collaborative work on a particular project via collaboration system 100, an appliance may send a request to collaboration server 302 for information associated with an asset to display the asset in a shared workspace of the particular project.

Database server 304 (as well as collaboration server 302) may store metadata 308 associated with collaboration system 200, such as metadata for specific assets, shared workspaces, and/or projects. For example, such metadata may include which assets are associated with a particular shared workspace, which shared workspaces are associated with a particular project, the state of various settings for each shared workspace, annotations made to specific assets, etc. Metadata 308 may also include aspect ratio metadata and asset metadata for each asset. In some implementations, aspect ratio metadata may include an aspect ratio assigned to the project (referred to herein as the "assigned aspect ratio"). An aspect ratio assigned to a project applies to the shared workspaces of the project so that all shared workspaces of the project have the same aspect ratio assigned to the project. Asset metadata for an asset may specify a location/position and dimensions/size of the asset within an associated shared workspace.

The asset metadata indicates the position and size of an asset, for example, implementing horizontal and vertical (x and y) coordinate values. In some embodiments, the asset metadata may express the position and size of an asset in percentage values. In such implementations, the size (width and height) and position (x, y) of the asset is represented in terms of percent locations along an x-axis (horizontal axis) and y-axis (vertical axis) of the associated shared workspace. For example, the position and size of an asset may be expressed as percentages of the shared workspace width and shared workspace height. The horizontal and vertical (x and y) coordinate values may correspond to a predetermined point on the asset, such as the position of the upper left corner of the asset. Thus, when display surfaces of appliances have different sizes and/or aspect ratios, each asset can still be positioned and sized proportional to the specific shared workspace in which is it being displayed. When multiple display devices of multiple appliances separately display a shared workspace, each may configure the local version of the shared workspace based on the received metadata.

File server 306 is the physical storage location for some or all asset content 310 that are rendered as files, such as documents, images, and videos. In some embodiments, file server 306 can receive requests for asset content 310 directly from appliances. For example, an asset, such as a word-processing document, may be associated with a shared workspace that is displayed on a display device of a plurality of appliances, e.g., the large and reduced format appliances 106, 108. When the asset is modified by a user at the large-format appliance 106, metadata for a file associated with the asset is updated in file server 306 by collaboration server 302, the reduced-format appliance 108 downloads the updated metadata for the file from file server 306, and the asset is then displayed, as updated, on the display surface 124 of the reduced-format appliance 108. Thus, file copies of all assets for a particular shared workspace and project may be stored at the file server 306, as well as stored at each appliance that is collaborating on a project.

Each of appliances is an instance of a collaborative multi-media platform disposed at a different location in a collaboration system 100. Each collaboration appliance is configured to provide a digital system that can be mirrored at one or more additional and remotely located appliances. Thus, collaboration clients facilitate the collaborative modification of assets, shared workspaces, and/or complete presentations or other projects, as well as the presentation thereof.

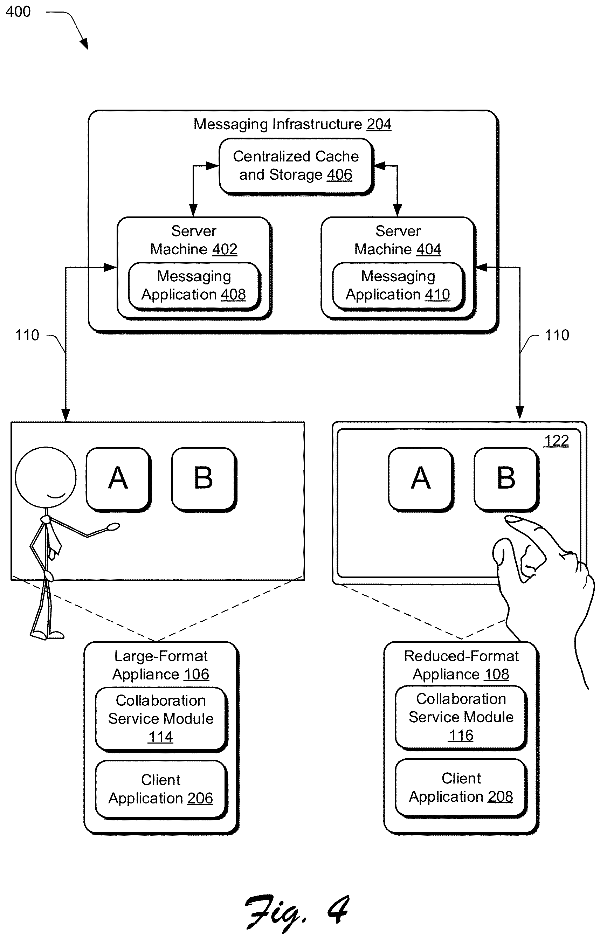

FIG. 4 depicts the messaging infrastructure 204 of FIG. 2 in greater detail. As shown, messaging infrastructure 204 includes server machines 402 and 404 coupled together via centralized cache and storage 406. Server machine 402 is coupled to the large-format appliance 106 and includes a messaging application 408. Server machine 404 is coupled to the reduced-format appliance 108 and includes a messaging application 410.

Server machines 402 and 404 are generally cloud-based or on-premises computing devices that include memory and processing systems as further described in relation to FIG. 8 configured to store and execute messaging applications 408 and 410, respectively. Messaging applications 408 and 410 are configured to generate real-time socket connections with the large and reduced format appliances 106, 108, respectively, to allow messages to be transported quickly between the appliances. In one implementation, messaging applications 408 and 410 are implemented as ASP.NET applications and rely on signalR WebSockets to accomplish fast, real-time messaging.

Centralized cache and storage 406 provides a persistent messaging back-end through which messages can be exchanged between messaging applications 408 and 410. In one embodiment, centralized cache and storage includes a Redis cache backed by a SQL database. Messaging applications 408 and 410 may be configured to periodically poll centralized cache and storage 406 for new messages, thereby allowing messages to be delivered to those applications quickly.

In operation, when the large-format appliance 106 transmits a message indicating that content stream A is available on streaming infrastructure 202, as described above, the large-format appliance 106 transmits that message to messaging application 408. Messaging application 408 may then relay the message to centralized cache and storage 406. Messaging application 410 polls centralized cache and storage 406 periodically, and may thus determine that that the message has arrived. Messaging application 410 then relays the message to the reduced-format appliance 108. The reduced-format appliance 108 may then parse the message to retrieve an identifier associated with the large-format appliance 106, and then stream content associated with the large-format appliance 106 from streaming infrastructure 202.

Having considered the above described collaborative workspace and supporting infrastructure, consider now how annotations can be synchronized across multiple platforms in accordance with one or more embodiments.

### Cross Platform Annotation Synchronization

In the following discussion, an overview of cross-platform annotation synchronization is described, followed by an implementation example.

Various embodiments enable annotations that are visually associated with an asset on one appliance to be shared amongst and synchronized between other appliances working together in a collaborative workspace environment. That is, as individuals interact with one another and with assets in a shared workspace, individuals can create annotations and visually associate the annotation with a particular asset. For example, one asset may be a spreadsheet that shows various data values that are relevant to a presentation that is taking place. The presenter may, during the course of the presentation, use their finger to touch-engage an appliance's touch-sensitive display device to circle or underline multiple data values that are relevant to the discussion. As the presenter's input is received, the input is processed to provide an annotation. An annotation can be defined by a "stroke". Accordingly, in this example, a stroke is defined by a "touch down" event, a "touch move" event, and a "touch up" event. A "stroke collection" is a list of strokes, where a "stroke" encompasses all the "stroke data" describing the stroke. Stroke data can include, by way of example and not limitation, a list of points that define the stroke, stroke size, stroke color, and any other metadata that may be collected concerning the stroke. Any or all strokes in a stroke collection can be communicated to a collaboration server which organizes and oversees synchronization between appliances. When the collaboration server receives the stroke or collection of strokes, the collaboration server sends a notification to the appliances of the other collaborative participants that a new stroke has been added to the collection of strokes that represents the annotation canvas of the particular asset. The appliances, after receiving the notification, can then communicate with the collaboration server to retrieve the latest strokes so that the annotations can be rendered on a corresponding appliance. Specifically, when an appliance communicates with the collaboration server, the collaboration server can communicate the stroke or collection of strokes back to the appliance. The appliance can then process the stroke and collection of strokes and render the strokes as an annotation relative to the asset that was previously annotated.

Assets and corresponding annotations can be associated with one another in any suitable way. In at least some embodiments, when an asset is rendered, each asset is composed of different layers. For example, an image will have a layer for the actual image, a layer to render the border, a layer to render a side menu, and a layer to render the annotation canvas. When an asset is scaled or resized, these layers are re-rendered according to new metadata associated with the asset. In regards to the annotation metadata or stroke collection, when the asset is scaled, the scale value on each point for a stroke is multiplied by a scale value and then the strokes are rendered using the point with the applied skill values. In this manner, all of the annotations are drawn to relative positions whenever an asset is scaled or resized. If an asset is moved, resized or loaded, the annotations are rendered using the upper left corner of each asset as the origin. In a document the origin is the upper left corner of each page. The stroke data associated with the annotation is collected and saved relative to the origin. When a stroke is saved to a database, if the corresponding asset is a document, a page number is also stored with the same record. If the asset is not a document, then a page number of "0" is saved. This allows assets to be subsequently loaded along with their corresponding annotations which are associated with the asset by virtue of the page number on which the annotation occurs.

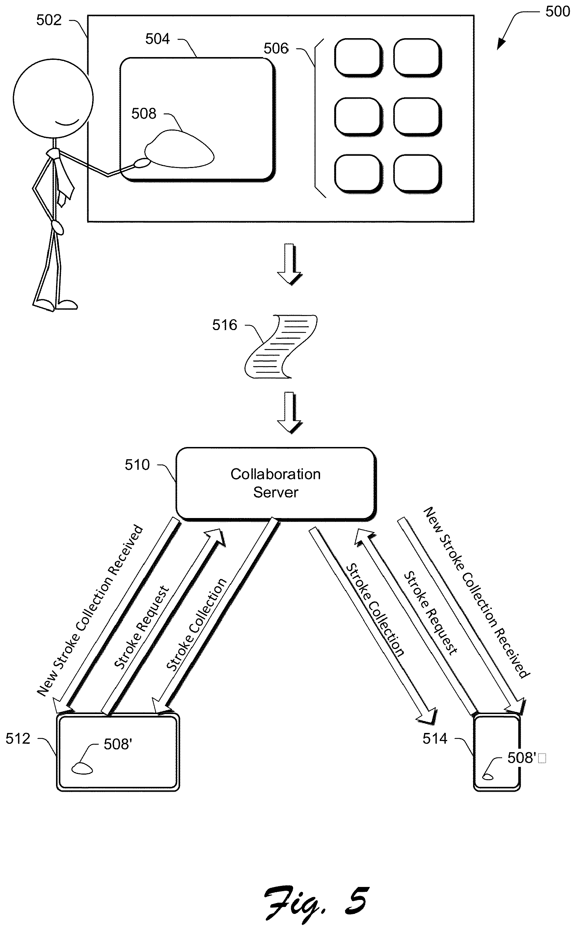

As an example, consider the following in conjunction with FIG. 5. There, a system that defines a collaborative work environment is shown generally at 500. In this example, the system includes a large-format appliance having a display device 502. On the display device, various assets are shown including a single asset 504 to the left, and a collection of assets 506 to the right. Assume in this example that the user has provided an annotation 508 onto content of the asset 504 by encircling some data displayed by the asset. This annotation can now be synchronized among the other members of the collaborative work environment including collaboration server 510, and various other collaborative participants that represent reduced-format appliances indicated at 512 and 514.

Specifically, upon completing the annotation 508, a stroke collection 516 of one or more strokes is defined and communicated to the collaboration server 510. The collaboration server then notifies the other appliances 512, 514 that a new stroke collection has been received (represented by the arrow designated "New Stroke Collection Received"). Appliances 512, 514 can then make a stroke request (represented by the arrow designated "Stroke Request") to retrieve the latest stroke or strokes from the collaborative server. The collaboration server 510 then communicates the stroke collection to each of the appliances 512, 514 (represented by the arrow designated "Stroke Collection") which can then process the stroke collection and render the associated annotation on their corresponding display device as indicated in the figure at 508' and 508". It is to be appreciated and understood that while the stroke defines the annotation in terms of points, other stroke type instructions may use other formats such as beziers and the like.

Having considered an overview of cross platform annotation synchronization, consider now an implementation example in accordance with one or more embodiments.

### Implementation Example

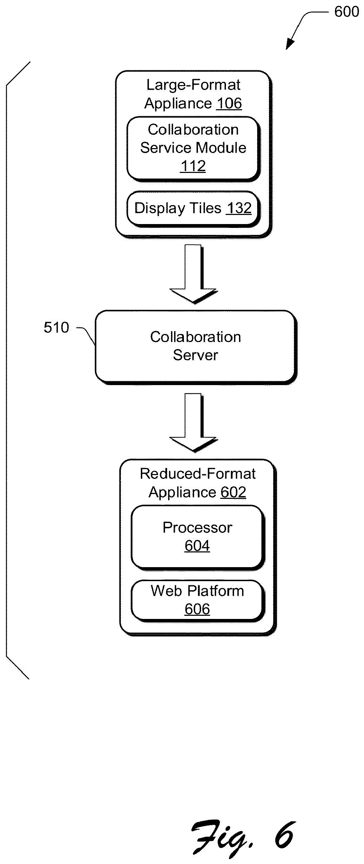

FIG. 6 includes a somewhat simplified diagram 600 of a large-format appliance 106 that operates as described above, and a reduced-format appliance 602. The reduced-format appliance includes one or more processors 604 and a client application in the form of a web platform 606. In this particular example, the web platform resides in the form of a web browser. The web browser can include any suitably-configured web browser. In this particular example, the web browser is WebGL-enabled. As will be appreciated by the skilled artisan, WebGL, which stands for "Web Graphics Library," is a JavaScript API for rendering interactive 3-D computer graphics and 2-D graphics within any compatible web browser without the use of plug-ins. WebGL is integrated into all the web standards of the browser allowing GPU accelerated usage of physics and image processing and effects as part of the webpage canvas. WebGL elements can be mixed with other HTML elements and compounds and with other parts of the page or page background. WebGL programs include control code written in JavaScript and shader code that is executed on a computer's Graphics Processing Unit (GPU). Web browser 606 can also use Canvas APIs for rendering content. The Canvas APIs allow for dynamic, scriptable rendering of 2-D shapes and bitmap images. Other technologies for rendering content can be utilized without departing from the spirit and scope of the claimed subject matter.

When a user interacts with an asset to provide an annotation, their interaction is tracked. If the interaction occurs on the large-format appliance 106, their interaction can be tracked by the collaborative service module 112. If the interaction occurs by way of web browser 606, the interaction can be tracked by the web platform 606.

Users can interact with assets in different ways using different input mechanisms. For example, the user can interact with an asset using a mouse, in which case their interaction can be tracked by observing mouse events such as "mouse down", "mouse move", and "mouse up". Alternately or additionally, the user can interact with an asset using touch input in which case their interaction can be tracked by observing "touch down", "touch move", and "touch up" events. Users can also interact with assets using other input mechanisms such as a stylus, pointer, and the like. In at least some embodiments, users can interact with assets in a touch-free manner, such as through the use of recognizable gestures that are captured by a camera and analyzed. Regardless of the manner in which the user interacts with an asset, their interaction defines an interaction pattern which, in turn, defines a stroke collection. As described above, a "stroke collection" is a list of strokes, where a "stroke" encompasses all the "stroke data" describing the stroke. Stroke data can include, by way of example and not limitation, a list of points that define the stroke, stroke size, stroke color, and any other metadata that may be collected concerning the stroke. The stroke collection can be used to draw a corresponding stroke on a display device of the appliance receiving the input. Any suitable technology can be utilized to draw a corresponding stroke including, by way of example and not limitation, Web-GL and Canvas APIs.

The stroke collection can also be sent, as described above, to the collaboration server 510. Any suitable format can be utilized represent the stroke collection. The stroke data can include, by way of example and not limitation, X and Y coordinate points, color, and thickness of the line at that point. In the illustrated and described embodiment, the stroke collection can be represented in any suitable format.

In at least some embodiments, the stroke collection is represented using a JavaScript Object Notation (JSON) format. JSON is an open standard format that uses human-readable text to transmit data objects consisting of attribute-value pairs. JSON is commonly used for asynchronous browser/server communication. As an example of the JSON format, consider the excerpt appearing just below:
{"ProjectItemID" : "7b1307a0-ddd2-43e8-8734-370d7c01deec", "AnnotationVersion" : 2, "OriginalWidth" : 417.8125, "OriginalH eight" : 238.75, "AnnotationCommandDTOs" : [{"DateCreated" : "2016-01-28T19 : 21:43.743Z", "StrokeId" : "2b39416f-8396-a074-ce0b-b6de80136c79", "AnnotationCommandParam" : "00000000-0000-0000-0000-000000000000", "StylusPoints" : [{"x" : 162.02048678428423, "y" : 67.7648836190 3466, "PressureFactor" : 0.5}, {"x" : 167.52048678428423, "y" : 69.2648836190346 6, "PressureFactor" : 0.5}, {"x" : 173.02048678428423, "y" : 70.76488361903466, " PressureFactor" : 0.5}, {"x" : 191.02048678428423, "y" : 79.76488361903466, "Pre ssureFactor" : 0.5}, {"x" : 205.02048678428423, "y" : 86.76488361903466, "Pressu reFactor" : 0.5}, {"x":220.02048678428423, "y" : 93.76488361903466, "PressureF actor" : 0.5}, {"x" : 234.02048678428423, "y" : 99.76488361903466, "PressureFact or": 0.5}, {"x" : 249.02048678428423, "y" : 108.76488361903466, "PressureFactor " : 0.5}, {"x" : 262.02048678428423, "y" : 114.76488361903466, "PressureFactor" : 0.5}, {"x" : 277.02048678428423, "y" : 121.76488361903466, "PressureFactor" : 0. 5}, {"x" : 293.02048678428423, "y" : 131.76488361903466, "PressureFactor" : 0.5} , {"x" : 301. 02048678428423, "y" : 135.76488361903466, "PressureFactor" : 0.5}, "x" : 312.02048678428423, "y" : 142.76488361903466, "PressureFactor" : 0.5}, {"x " : 319.02048678428423, "y" : 146.76488361903466, "PressureFactor" : 0.5}, {"x" : 326.02048678428423, "y" : 149.76488361903466, "PressureFactor" : 0.5}, {"x" : 33 0.02048678428423, "y" : 153.76488361903466, "PressureFactor" : 0.5}, {"x" : 335. 02048678428423, "y" : 156.76488361903466, "PressureFactor" : 0.5}, {"x" : 338.02 048678428423, "y" : 158.76488361903466, "PressureFactor" : 0.5}, {"x" : 340.0204 8678428423, "y" : 158.76488361903466, "PressureFactor" : 0.5}, {"x" : 342.020486 78428423, "y" : 160.76488361903466, "PressureFactor" : 0.5}, {"x" : 345.02048678 428423, "y" : 162.76488361903466, "PressureFactor" : 0.5}, {"x" : 346.0204867842 8423, "y" : 163.76488361903466, "PressureFactor" : 0.5}, {"x" : 347.020486784284 23, "y" : 164.76488361903466,"PressureFactor" : 0.5}, {"x" : 348.02048678428423 , "y" : 164.76488361903466, "PressureFactor" : 0.5}, {"x" : 349.02048678428423, " y" : 166.76488361903466, "PressureFactor" : 0.5}, {"x" : 349.52048678428423, "y" : 166.76488361903466, "PressureFactor" : 0.5}, {"x" : 350.02048678428423, "y" : 1 66.76488361903466, "PressureFactor" : 0.5}, {"x" : 351.02048678428423, "y" : 167 .76488361903466, "PressureFactor" : 0.5}, {"x" : 352.02048678428423, "y" : 167.7 6488361903466, "PressureFactor" : 0.5}, {"x" : 352.02048678428423, "y" : 168.264 88361903466, "PressureFactor" : 0.5}, {"x" : 352.02048678428423, "y" : 168.76488 361903466, "PressureFactor" : 0.5}, {"x" : 352.52048678428423, "y" : 168.7648836 1903466, "PressureFactor" : 0.5}, {"x" : 353.02048678428423, "y" : 168.764883619 03466, "PressureFactor" : 0.5}], "StrokeDrawingAttributes" : {"Color" : "#FFDE2 31F", "StylusTip" : "Ellipse", "StylusTipTransform" : "Identity", "Height" : 5, " Width" : 5, "FitToCurve" : true, "IgnorePressure" : false, "IsHighlighter" : false }, "ClientId" : "1234", "TransactionId" : "d53a98c3-3073-6d71-f9e2-4937c461fbd2", "Type" : 0}], "PageNumber" : 0, "ConnectionId" : "d739517a-129e-4c3f-92c2-06bfc6552144", "ProjectId" : "4ebba343-bc1f-4fe3-a8a7-1f3f93ed4ec3"}

Here, the attributes in this particular JSON format for describing the list include a "ProjectItemID" which identifies the project, a "AnnotationVersion" which describes the version of the annotation (which can be added by the collaboration server), and various other attributes including those associated with the width and height of an annotation, a stroke ID, pressure factors, X and Y coordinates of individual points and color.

In the illustrated and described embodiment, the JSON format list is communicated to the collaboration server via a REST (Representational State Transfer) API in an HTTPS call to the collaboration server 510 which causes the JSON format list to be posted to the server. When the collaboration server 510 receives the JSON format list, the collaboration server sends out a notification to the other appliances, by way of a persistent Web socket connection, that a new stroke has been added to the collection of strokes that represent the annotation canvas of the particular asset. Note that the annotation canvas for a particular asset includes a unique identifier, such as a version number, that is tracked by the collaboration server. Each time a new stroke is added to the collection of strokes that represent the annotation canvas for the particular asset, the version number is incremented. This way, the other appliances can track the most recent version of annotations.

After the other appliances have received the notification from the collaboration server, the appliances make a request to the collaboration server for any new strokes that it has received. In a request to the collaboration server, each appliance includes the version number of its most current version. So, for example, if the newest version number is "n+5" and the appliance request indicates that its current version is "n+4", the collaboration server will know to return any strokes associated with the version number "n+5."

In operation, the "strokes" that are returned to the other appliances reside in the form of the JSON format list that describes the various points and their attributes. This information is processed and used to render the annotation on the receiving appliance. So, for example, if an annotation has been made on large-format appliance 106, its corresponding JSON format list is provided to the collaboration server which sends a notification, as described above, to all of the reduced-format appliances that make up the work environment for this particular project. The appliances then request the most recent version of strokes and, correspondingly, the collaboration server provides the most recent version of the JSON format list to the appliances. The request to the collaboration server can be made by way of an asynchronous call from the appliance. Each appliance's web platform 606, such as a web browser, then processes the JSON format list and can use WebGL (or any other suitable technology) to render the annotation on their own display device.

Operating in this way, annotations can be synchronized across multiple disparate clients regardless of the platform technologies utilized to generate the annotations. For example, a native iOS application could use the REST API to retrieve the stroke collection and render the associated strokes using the Swift libraries in iOS.

Having considered various systems in which annotations can be synchronized across platforms, including platforms that utilize different technologies, consider now an example procedure in accordance with one or more embodiments.

### Example Procedures

The following discussion describes techniques that may be implemented utilizing the previously described systems and devices. Aspects of each of the procedures may be implemented in hardware, firmware, or software, or a combination thereof. The procedures are shown as a set of blocks that specify operations performed by one or more devices and are not necessarily limited to the orders shown for performing the operations by the respective blocks.

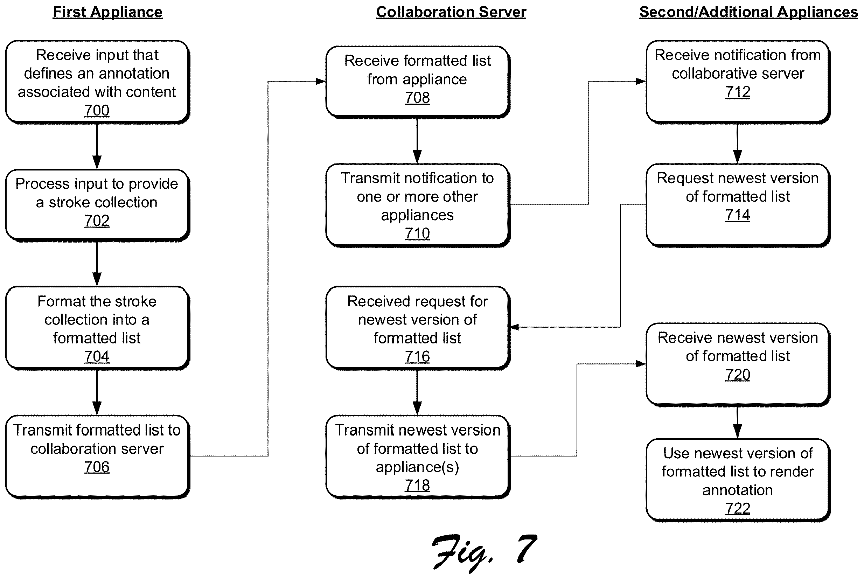

FIG. 7 depicts a procedure in an example implementation in which annotations can be synchronized in a shared workspace. In the illustrated example, the procedures are specified under three columns labeled "First Appliance", "Collaboration Server", and "Second/Additional Appliances" respectively. The column labels are intended to depict which entity performs which action. The first, second, and additional appliances can be any of the large-format appliance or the reduced-format appliance.

At block 700 the first appliance receives an input that defines an annotation associated with content of an asset. Any suitable type of input can be received to define any suitable type of annotation. Input can include, by way of example and not limitation, mouse input, stylus input, touch input, natural user interface input, gestural input, and the like. Annotations can assume any form or structure that can be provided onto a display device through the input mentioned above. At block 702, the input is processed to provide a stroke collection of one or more strokes. This operation can be performed in any suitable way. In one or more embodiments, hardware and/or software executing on the first appliance can track the input movement by way of various events and can then abstract the input into the stroke collection. At block 704, the stroke collection is formatted into a formatted list. The formatted list can include any suitably-configured formatted list. In one embodiment, the formatted list is formatted in accordance with a JSON format. The formatted list can include various information including, by way of example and not limitation, locational coordinates of each point included in the stroke, and other drawing attributes of the points as noted above. At block 706, the formatted list is transmitted to a collaboration server.

At block 708, the collaboration server receives formatted list from the first appliance. At block 710, the collaboration server transmits a notification to one or more other appliances comprising part of the collaboration workspace. The notification can include a notification that a new stroke collection associated with new annotations has been received, as well as a version number associated with the new stroke collection.

At block 712, a second and/or additional appliances receive the notification from the collaboration server and, at block 714, request the newest version of the formatted list. This step can be performed by comparing the version number that was received in the notification from the collaboration server with the version number maintained by the second and/or additional appliances that represent the most current version of annotations maintained by the second and/or additional appliances.

At block 716, the collaboration server receives the request for the newest version of the formatted list and, at block 718, the collaboration server transmits the newest version of the formatted list to the requesting appliance(s). In one or more embodiments, the list that is transmitted by the collaboration server can comprise the same information in the same format that the collaboration server received from the first appliance. Thus, in some embodiments, this list will be the JSON format list.

At block 720, the second and/or additional appliances receive the newest version of the formatted list and, at block 722, the second and/or additional appliances use the newest version of the formatted list to render the annotation. The annotation can be rendered using any suitable technology, examples of which are provided above.

Having considered an example method in accordance with one or more embodiments, consider now an example system and device that can be utilized to implement the principles described above.

### Example System and Device

FIG. 8 illustrates an example system generally at 800 that includes an example computing device 802 that is representative of one or more computing systems and/or devices that may implement the various techniques described herein. This is illustrated through inclusion of the collaboration service module 114 and collaboration manager module 112. The computing device 802 may be, for example, a server of a service provider, a device associated with a client (e.g., a client device), an on-chip system, and/or any other suitable computing device or computing system.

The example computing device 802 as illustrated includes a processing system 804, one or more computer-readable media 806, and one or more I/O interface 808 that are communicatively coupled, one to another. Although not shown, the computing device 802 may further include a system bus or other data and command transfer system that couples the various components, one to another. A system bus can include any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 804 is representative of functionality to perform one or more operations using hardware. Accordingly, the processing system 804 is illustrated as including hardware element 810 that may be configured as processors, functional blocks, and so forth. This may include implementation in hardware as an application specific integrated circuit or other logic device formed using one or more semiconductors. The hardware elements 810 are not limited by the materials from which they are formed or the processing mechanisms employed therein. For example, processors may be comprised of semiconductor(s) and/or transistors (e.g., electronic integrated circuits (ICs)). In such a context, processor-executable instructions may be electronically-executable instructions.

The computer-readable storage media 806 is illustrated as including memory/storage 812. The memory/storage 812 represents memory/storage capacity associated with one or more computer-readable media. The memory/storage component 812 may include volatile media (such as random access memory (RAM)) and/or nonvolatile media (such as read only memory (ROM), Flash memory, optical disks, magnetic disks, and so forth). The memory/storage component 812 may include fixed media (e.g., RAM, ROM, a fixed hard drive, and so on) as well as removable media (e.g., Flash memory, a removable hard drive, an optical disc, and so forth). The computer-readable media 806 may be configured in a variety of other ways as further described below.

Input/output interface(s) 808 are representative of functionality to allow a user to enter commands and information to computing device 802, and also allow information to be presented to the user and/or other components or devices using various input/output devices. Examples of input devices include a keyboard, a cursor control device (e.g., a mouse), a microphone, a scanner, touch functionality (e.g., capacitive or other sensors that are configured to detect physical touch), a camera (e.g., which may employ visible or non-visible wavelengths such as infrared frequencies to recognize movement as gestures that do not involve touch), and so forth. Examples of output devices include a display device (e.g., a monitor or projector), speakers, a printer, a network card, tactile-response device, and so forth. Thus, the computing device 802 may be configured in a variety of ways as further described below to support user interaction.

Various techniques may be described herein in the general context of software, hardware elements, or program modules. Generally, such modules include routines, programs, objects, elements, components, data structures, and so forth that perform particular tasks or implement particular abstract data types. The terms "module," "functionality," and "component" as used herein generally represent software, firmware, hardware, or a combination thereof. The features of the techniques described herein are platform-independent, meaning that the techniques may be implemented on a variety of commercial computing platforms having a variety of processors.

An implementation of the described modules and techniques may be stored on or transmitted across some form of computer-readable media. The computer-readable media may include a variety of media that may be accessed by the computing device 802. By way of example, and not limitation, computer-readable media may include "computer-readable storage media" and "computer-readable signal media."

"Computer-readable storage media" may refer to media and/or devices that enable persistent and/or non-transitory storage of information in contrast to mere signal transmission, carrier waves, or signals per se. Thus, computer-readable storage media refers to non-signal bearing media. The computer-readable storage media includes hardware such as volatile and nonvolatile, removable and non-removable media and/or storage devices implemented in a method or technology suitable for storage of information such as computer readable instructions, data structures, program modules, logic elements/circuits, or other data. Examples of computer-readable storage media may include, but are not limited to, RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and which may be accessed by a computer.

"Computer-readable signal media" may refer to a signal-bearing medium that is configured to transmit instructions to the hardware of the computing device 802, such as via a network. Signal media typically may embody computer readable instructions, data structures, program modules, or other data in a modulated data signal, such as carrier waves, data signals, or other transport mechanism. Signal media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, hardware elements 810 and computer-readable media 806 are representative of modules, programmable device logic and/or fixed device logic implemented in a hardware form that may be employed in some embodiments to implement at least some aspects of the techniques described herein, such as to perform one or more instructions. Hardware may include components of an integrated circuit or on-chip system, an application-specific integrated circuit (ASIC), a field-programmable gate array (FPGA), a complex programmable logic device (CPLD), and other implementations in silicon or other hardware. In this context, hardware may operate as a processing device that performs program tasks defined by instructions and/or logic embodied by the hardware as well as a hardware utilized to store instructions for execution, e.g., the computer-readable storage media described previously.

Combinations of the foregoing may also be employed to implement various techniques described herein. Accordingly, software, hardware, or executable modules may be implemented as one or more instructions and/or logic embodied on some form of computer-readable storage media and/or by one or more hardware elements 810. The computing device 802 may be configured to implement particular instructions and/or functions corresponding to the software and/or hardware modules. Accordingly, implementation of a module that is executable by the computing device 802 as software may be achieved at least partially in hardware, e.g., through use of computer-readable storage media and/or hardware elements 810 of the processing system 804. The instructions and/or functions may be executable/operable by one or more articles of manufacture (for example, one or more computing devices 802 and/or processing systems 804) to implement techniques, modules, and examples described herein.

The techniques described herein may be supported by various configurations of the computing device 802 and are not limited to the specific examples of the techniques described herein. This functionality may also be implemented all or in part through use of a distributed system, such as over a "cloud" 814 via a platform 816 as described below.

The cloud 814 includes and/or is representative of a platform 816 for resources 818. The platform 816 abstracts underlying functionality of hardware (e.g., servers) and software resources of the cloud 814. The resources 818 may include applications and/or data that can be utilized while computer processing is executed on servers that are remote from the computing device 802. Resources 818 can also include services provided over the Internet and/or through a subscriber network, such as a cellular or Wi-Fi network.

The platform 816 may abstract resources and functions to connect the computing device 802 with other computing devices. The platform 816 may also serve to abstract scaling of resources to provide a corresponding level of scale to encountered demand for the resources 818 that are implemented via the platform 816. Accordingly, in an interconnected device embodiment, implementation of functionality described herein may be distributed throughout the system 800. For example, the functionality may be implemented in part on the computing device 802 as well as via the platform 816 that abstracts the functionality of the cloud 814.

### Conclusion

Various embodiments enable annotations that are visually associated with an asset on one appliance to be shared amongst and synchronized between other appliances working together in a collaborative workspace environment. That is, as individuals interact with assets in a shared workspace, individuals can create annotations and visually associate the annotations with a particular asset, such as circling data, underlining a sentence, making notes in a margin, and the like. An annotation can be defined by a "stroke". A "stroke collection" is a list of strokes, where a "stroke" encompasses all the "stroke data" describing the stroke. Stroke data can include, by way of example and not limitation, a list of points that define the stroke, stroke size, stroke color, and any other metadata that may be collected concerning the stroke. Any or all strokes in a stroke collection can be communicated to a collaboration server which organizes and oversees synchronization between appliances. When the collaboration server receives the stroke or collection of strokes, the collaboration server sends a notification to the appliances of the other collaborative participants that a new stroke has been added to the collection of strokes that represents the annotation canvas of the particular asset. The appliances, after receiving the notification, can then communicate with the collaboration server to retrieve the latest strokes so that the annotations can be rendered on a corresponding appliance. Specifically, when an appliance communicates with the collaboration server, the collaboration server can communicate the stroke or collection of strokes back to the appliance. The appliance can then process the stroke and collection of strokes and render the strokes as an annotation relative to the asset that was previously annotated.

Although the invention has been described in language specific to structural features and/or methodological acts, it is to be understood that the invention defined in the appended claims is not necessarily limited to the specific features or acts described. Rather, the specific features and acts are disclosed as example forms of implementing the claimed invention.

## Claims

1. A method comprising:
receiving, by a large-format appliance (106) participating in a collaborative workspace with one or more reduced-format appliances (108; 512, 514; 602), an input that defines an annotation (126; 508) visually associated with content (136; 310) of an asset (504, 506) displayed on a display device (502) of the large-format appliance (106);
processing the input to provide a stroke collection (516) of one or more strokes;
formatting the stroke collection (516) into a formatted list; and
transmitting the formatted list to a collaboration server (302; 510), effective to enable the collaboration server (302; 510) to utilize the formatted list to synchronize the annotation (126; 508) amongst the one or more reduced-format appliances (108; 512, 514; 602).

2. The method as described in claim 0, wherein the input comprises at least one of a mouse input, a stylus input, a touch input, a natural user interface input, or a gestural input.

3. The method as described in claim 0 or 2, wherein processing the input comprises tracking the input by way of various events and abstracting the input into the stroke collection (516).

4. The method as described in any one of the preceding claims, wherein the formatted list comprises a JavaScript Object Notation (JSON) formatted list.

5. The method as described in any one of the preceding claims, wherein the formatted list describes:
- X and Y locations of individual points of the stroke collection (516), and/or
- X and Y locations of individual points of the stroke collection (516) and one or more additional drawing attributes associated with the individual points.

6. The method as described in any one of the preceding claims, wherein the large-format appliance (106) comprises a plurality of display tiles (134) arranged to form a display wall.

7. The method as described in any one of the preceding claims, wherein the transmitting the formatted list comprises using a Representational State Transfer (REST) API.

8. The method as described in any one of the preceding claims further comprising receiving a notification from the collaboration server (302; 510) that a new formatted list associated with a new annotation (126; 508) has been received; requesting the new formatted list from the collaboration server (302; 510) using a unique identifier associated with the new formatted list; responsive to requesting the new formatted list, receiving the new formatted list; and using the new formatted list to render the new annotation (126; 508) on the display device (502).

9. One or more computer-readable storage media comprising instructions that are stored thereon that, responsive to execution by a reduced-format appliance (108; 512, 514; 602), causes the reduced-format appliance (108; 512, 514; 602) to perform operations comprising:
receiving, by the reduced-format appliance (108; 512, 514; 602) participating in a collaborative workspace with one or more other appliances including a large-format appliance (106), a notification from a collaborative server, the notification being associated with a stroke collection (516) of one or more strokes that describes an annotation (126; 508) that has been received by the large-format appliance (106) relative to an asset (504, 506) displayed on a display device (502) of the large-format appliance (106), the notification including a unique identifier;
responsive to receiving the notification, requesting, using the unique identifier, the stroke collection (516) from the collaboration server (302; 510);
responsive to requesting the stroke collection (516), receiving the stroke collection (516) from the collaboration server (302; 510); and
using the stroke collection to render the annotation (126; 508) on a display device (502) of the reduced-format appliance (108; 512, 514; 602).

10. One or more computer-readable storage media as described in claim 9, wherein the format of the stroke collection (516) comprises a JavaScript Object Notation (JSON) format.

11. One or more computer-readable storage media as described in claim 9 or 10, wherein the stroke collection (516) includes X and Y locations of individual points defining the annotation (126; 508) and
- one or more additional drawing attributes associated with the stroke collection (516), and/or
- one or more additional drawing attributes associated with the stroke collection (516), at least one of the one or more additional drawing attributes comprising a thickness of a line at a respective individual point, and/or
- one or more additional drawing attributes associated with the stroke collection (516), the one or more additional drawing attributes comprising at least a thickness of a line at a respective individual point and a color of the line at the respective individual point.

12. One or more computer-readable storage media as described in any one of claims 9 to 11, wherein receiving the notification comprises receiving the notification by way of a persistent Web socket.

13. A system (100; 200) comprising:
one or more processors (604; 804);
a collaboration server (302; 510) configured to synchronize annotations (126; 508) made on content (136; 310) of assets (504, 506) displayed on respective display devices (502) of appliances (106, 108; 512, 514; 602) participating in a collaborative workspace; and
one or more computer-readable storage media (806) comprising instructions stored thereon which, responsive to execution by the one or more processors, cause the collaboration server (302; 510) to perform operations comprising:
receiving from a large-format appliance (106) participating in the collaborative workspace with one or more reduced-format appliances (108; 512, 514; 602), a stroke collection (516) of one or more strokes that describe an annotation (126; 508) associated with content (136; 310) of an asset (504, 506) displayed on a display device (502) of the large-format appliance (106);
transmitting a notification to the one or more reduced-format appliances (108; 512, 514; 602) that the stroke collection (516) has been received, the notification including a unique identifier;
responsive to transmitting the notification, receiving a request from the one or more reduced-format appliances (108; 512, 514; 602) for the stroke collection (516), the request including a unique identifier associated with a most current stroke collection (516) of the one or more reduced-format appliances (108; 512, 514; 602);
responsive to receiving the request for the stroke collection (516) and based at least in part on the unique identifier, transmitting the stroke collection (516) to the one or more reduced-format appliances (108; 512, 514; 602) effective to enable the annotation (126; 508) to be rendered on respective display devices (502) of the one or more reduced-format appliances (108; 512, 514; 602).

14. The system (100; 200) of claim 13, wherein the stroke collection (516) comprises a JavaScript Object Notation (JSON) formatted list.

15. The system (100; 200) of claim 13 or 14, wherein the stroke collection (516) describes:
- X and Y locations of individual points of the annotation (126; 508), and/or
- X and Y locations of individual points of the annotation (126; 508) and one or more additional drawing attributes associated with the annotation (126; 508), and/or
- X and Y locations of individual points of the annotation (126; 508) and one or more additional drawing attributes associated with the annotation (126; 508), the one or more additional drawing attributes comprising at least a thickness of a line at a respective individual point and a color of the line at the respective individual point.

16. One or more computer programs adapted to perform, when executed by one or more processors (604; 804), the method according to any one of claims 1 to 8.
